# EUROPÄISCHE PATENTSCHRIFT

(11) **EP 1 082 580 B1**
(45) Veröffentlichungstag und Bekanntmachung des Hinweises auf die Patenterteilung: **02.04.2003**
(21) Anmeldenummer: 99929030.7
(22) Anmeldetag: 27.04.1999
(51) Int. Cl.: G01B 9/02

(54) **MODULATIONSINTERFEROMETER UND FASEROPTISCH GETRENNTE MESSSONDE MIT LICHTLEITERN**
MODULATION INTERFEROMETER AND FIBEROPTICALLY DIVIDED MEASURING P ROBE WITH LIGHT GUIDED
INTERFEROMETRE A MODULATION ET SONDE DE MESURE POURVUE DE CONDUITS DE LUMIERE ET DIVISEE PAR FIBRE OPTIQUE

(30) Priorität: 04.05.1998 DE 19819762
(43) Veröffentlichungstag der Anmeldung: 14.03.2001
(73) Patentinhaber: ROBERT BOSCH GMBH, 70442 Stuttgart (DE)
(72) Erfinder: DRABAREK, Pawel, D-75233 Tiefenbronn (DE); DUVOISIN, Marc-Henri, CH-1028 Préverenges (CH); MARCHAL, Dominique, CH-1337 Vallorbe (CH); THOMINET, Vincent, CH-1026 Echandens (CH)
(86) Internationale Anmeldenummer: DE9901242
(87) Internationale Veröffentlichungsnummer: WO99057506

(56) Entgegenhaltungen:
- EP-A- 0 401 694
- DE-A- 3 632 978
- DE-A- 19 522 262
- US-A- 4 627 731
- Y.-J.RAO, D.A.JACKSON: "Recent progress in fibre optic low-coherence interferometry" MEAS. SCI. TECHNOL., Bd. 7, 1. Juli 1996 (1996-07-01), Seiten 981-999, XP000632360 GB
- H.GRÜBEL, G.NITSCH: "Interferometrisches Echtzeitwegmessystem mit vollständig dielektrischem, integriert optischen Sensorkopf" TM TECHNISCHES MESSEN, Bd. 58, Nr. 4, 1. April 1991 (1991-04-01), Seiten 165-169, XP000227769 München (DE)

## Beschreibung

### Stand der Technik

Die Erfindung bezieht sich auf eine interferometrische Meßeinrichtung zum Erfassen der Form, der Rauhheit oder des Abstandes von Oberflächen mit einem Modulationsinterferometer, das eine räumlich kohärente Strahlungsquelle und einen ersten Strahlteiler zum Aufteilen von deren Strahlung in zwei Teilstrahlen aufweist, von denen der eine gegenüber dem anderen mittels einer Mod ulationseinrichtung in seiner Licht-Phase oder Licht-Frequenz gegenüber dem anderen verschoben ist und anschließend die beiden Teilstrahlen vereinigt sind, mit einer Meßsonde, in der die vereinigten Teilstrahlen in einen durch einen Meßzweig geführten und an der Oberfläche reflektierten Meßstrahl sowie einen durch einen Referenzzweig geführten und darin reflektierten Referenzstrahl aufgeteilt werden und in der der reflektierte Meßstrahl mit dem reflektierten Referenzstrahl überlagert ist, und mit einer Empfängereinheit zum Aufspalten der überlagerten Strahlung in mindestens zwei Strahlen mit unterschiedlichen Wellenlängen und Umwandeln der Strahlung in elektrische Signale und zum Auswerten der Signale auf der Grundlage einer Phasendifferenz.

Eine derartige interferometrische Meßeinrichtung ist in der EP 0 126 475 B1 als bekannt ausgewiesen. Bei dieser bekannten Meßeinrichtung werden rauhe Oberflächen eines Meßobjektes interferometrisch ausgemessen, wobei eine Strahlerzeugungseinheit mit Laserlichtquellen verwendet wird, die Licht unterschiedlicher Wellenlängen abgeben. Mittels eines Strahlteilers wird das Laserlicht in einen Referenzstrahl eines Referenzstrahlenganges und einen Meßstrahl eines Meßstrahlenganges aufgeteilt. Der Meßstrahlengang trifft auf die zu vermessende Oberfläche, während der Referenzstrahlengang an einer Referenzfläche z.B. in Form eines Spiegels reflektiert wird. Das von der Oberfläche und der Referenzfläche reflektierte Licht wird im Strahlteiler vereinigt und mit Hilfe einer Linse in eine Interferogrammebene fokussiert, in der ein Speckle-Muster auftritt. Dieses Speckle-Muster wird zur Bestimmung der Oberflächenform ausgewertet, wobei eine Phasendifferenz der Interferogrammphasen im Meßpunkt bestimmt wird. Zur Vereinfachung der Auswertung wird ein Heterodyn-Verfahren angewendet, wobei die Frequenz des Referenzstrahles um eine Heterodyn-Frequenz mittels einer Frequenzverschiebungseinrichtung im Referenzstrahlengang gegenüber der Frequenz des Meßstrahles verschoben wird. Mit dieser Meßeinrichtung können Oberflächenformen fein aufgelöst werden. Jedoch sind die Justierung und Handhabung beispielsweise für einen Einsatz in der industriellen Fertigung aufwendig.

Eine weitere interferometrische Meßeinrichtung ist in der DE 39 06 118 A1 angegeben, bei der zwischen mehreren Laserlichtquellen und einem Meßabschnitt Lichtleitfasern vorgesehen sind. Auch hierbei wird zum Bestimmen der Oberflächenstrukturen eine Phasendifferenz ausgewertet. Hinsichtlich der Handhabung und Justierung an schwer zugänglichen Stellen ist auch dieser bekannte Aufbau ungünstig.

Wesentlich günstiger für den praktischen Einsatz beispielsweise in einem Fertigungsprozeß ist eine in der nicht vorveröffentlichten deutschen Patentanmeldung 198 08 273.8 (DE-A1-798 08273 veröffentlicht 9,9,99) angegebene weitere interferometrische Meßeinrichtung, die ein Modulationsinterferometer und eine davon räumlich getrennte, mittels einer Lichtleitfaseranordnung angekoppelte Meßsonde aufweist. Günstig sind hierbei insbesondere eine zeitlich kurzkohärente Strahlungsquelle des Modulationsinterferometers, wodurch eine stabile, gut auswertbare Strahlung erhalten wird, sowie ein relativ kompakter Aufbau der Meßsonde. Allerdings ist die dabei noch zu beachtende Anordnung der Meßsonde gegenüber der Oberfläche des Meßobjektes noch mit einigen Justagemaßnahmen verbunden, die eine Vereinfachung wünschenswert machen.

Der Erfindung liegt die Aufgabe zugrunde, eine interferometrische Meßeinrichtung der eingangs angegebenen Art bereitzustellen, die bei verhältnismäßig einfachem, kompaktem Aufbau eine vereinfachte Handhabung ergibt.

Diese Aufgabe wird mit den Merkmalen des Anspruches 1 gelöst. Hiernach ist vorgesehen, daß das als Baueinheit aufgebaute Modulationsinterferometer von der Meßsonde räumlich getrennt und über eine Lichtleitfaseranordnung mit dieser koppelbar ist und daß der Meßzweig und der Referenzzweig durch einen oder mehrere den Meßstrahl und den Referenzstrahl leitende Festkörper gebildet sind.

Die räumlich von dem als Baueinheit aufgebauten Modulationsinterferometer mittels der Lichtleitfaseranordnung getrennte Meßsonde ist ihrerseits durch den Aufbau des Meßzweiges und des Referenzzweiges als Festkörper kompakt und damit gut handhabbar und bezüglich des Meßobjektes einfach justierbar ausgebildet. Auch ist die Justierung des Referenzzweiges und des Meßzweiges der Meßsonde relativ zueinander und bezüglich der interferometrischen Meßeinrichtung wegen der eindeutigen Positionierung der einzelnen Elemente einfach.

Ist der Aufbau derart, daß am Eingang der Meßsonde eine Kollimatoreinrichtung und am Ausgang des Meßzweigs eine Fokussiereinrichtung und ein dieser nachgeschaltetes Ablenkelement zum Auskoppeln und wieder Einkoppeln des zu der zu vermessenden Oberfläche gerichteten und von dieser reflektierten Meßstrahls vorgesehen sind, so werden einerseits zur Bildung des Interferenz-Musters ein günstiger Meßstrahl und Referenzstrahl erhalten, und andererseits wird der Meßstrahl durch das Ablenkelement auch bei einer schräg zur Richtung des Meßzweiges gerichteten zu vermessenden Oberfläche senkrecht zu diesem ausrichtbar, so daß eine zuverlässige Vermessung der Oberfläche erzielt wird. Dabei besteht eine vorteilhafte Ausbildung darin, daß die Kollimatoreinrichtung und/oder die Fokussiereinrichtung eine GRIN-Linse ist/sind.

Mit den Maßnahmen, daß einer der beiden Teilstrahlen in dem Modulationsinterferometer ein Verzögerungselement durchläuft, das eine Differenz der optischen Weglängen der beiden Teilstrahlen erzeugt, die größer ist als die Kohärenzlänge von der kurzkohärenten Strahlungsquelle abgegebene Strahlung, und daß in dem Meßzweig bezüglich des Referenzzweiges eine weitere Differenz der optischen Weglängen erzeugt wird, mit der die durch das Verzögerungselement erzeugte Differenz der optischen Weglängen kompensiert wird, wird ein interferieren der beiden Teilstrahlen vor dem Eintritt in die Meßsonde vermieden und erst nach der Reflexion an der Oberfläche bzw. in dem Referenzzweig zustandekommt und ein Kohärenzmultiplex ermöglicht wird.

Mehrere Abschnitte der zu vermessenden Oberfläche bzw. mehrere getrennte Oberflächen können ohne Umpositionieren der Meßsonde dadurch schnell und sicher vermessen werden, daß der Meßzweig mindestens ein weiteres Ablenkelement aufweist, mit dem der in dem Meßzweig geführte Meßstrahl aufgespalten und auf eine weitere Stelle der zu vermessenden Oberfläche gerichtet und der von dieser reflektierte Meßstrahl wieder in den Meßzweig eingekoppelt wird. Dabei bestehen zwei verschiedene Aufbaumöglichkeiten darin, daß in dem Modulationsinterferometer mittels austauschbarer, unterschiedlicher Verzögerungselemente unterschiedliche optische Weglängen vorgebbar sind, und daß die kompensierende Differenz der optischen Weglängen durch Verstellen eines Reflexions- oder Umlenkelementes des Referenzzweiges oder durch den einzelnen abgespalteten Meßstrahlen jeweils zugeordnete separate Referenzzweige in Abstimmung auf die unterschiedlichen Verzögerungselemente gebildet ist. Sind separate Referenzzweige vorgesehen, so ergibt sich unter Zuordnung zu dem entsprechenden Verzögerungselement ohne weitere Einstellung durch Kohärenzmultiplex die gewählte Meßstelle der Oberfläche eindeutig. Aber auch die Verstellung der kompensierenden optischen Wegdifferenz des Meßzweiges bezüglich des Referenzzweiges mittels des Reflexions- bzw. Umlenkelementes des Referenzzweiges ist relativ einfach möglich.

Zwei unterschiedliche Aufbaumöglichkeiten für die Meßsonde bestehen darin, daß der Meßzweig und der oder die Referenzzweig(e) als getrennte Arme der Meßsonde nach Art eines Michelson-Interferometers (wie in Fig. 1 und 2 dargestellt) oder in einem gemeinsamen Arm nach Art eines Fizeau-Interferometers aufgebaut ist (wie in Fig. 3 dargestellt. Sind dabei der Meßzweig und der Referenzzweig in einem gemeinsamen Arm der Meßsonde ausgebildet, so ergibt sich eine besonders kompakte Bauweise der Meßsonde, die auch unter ungünstigen Platzverhältnissen eingesetzt werden kann.

Eine weitere Vereinfachung des Aufbaus der Meßeinrichtung wird dadurch erzielt, daß der zur Meßsonde hin und von dieser zurückgeleitete Strahl über eine gemeinsame monomode Lichtleitfaseranordnung geführt ist und daß der zur Empfängereinheit geführte Strahl aus der Lichtleitfaseranordnung mittels eines Abzweigstückes ausgekoppelt ist. Die Ankopplung der Meßsonde an das Modulationsinterferometer und die Empfängereinheit kann dabei auf einfache Weise mittels Steckverbindern erfolgen.

Die Erfindung wird nachfolgend anhand von Ausführungsbeispielen unter Bezugnahme auf die Zeichnungen näher erläutert. Es zeigen:

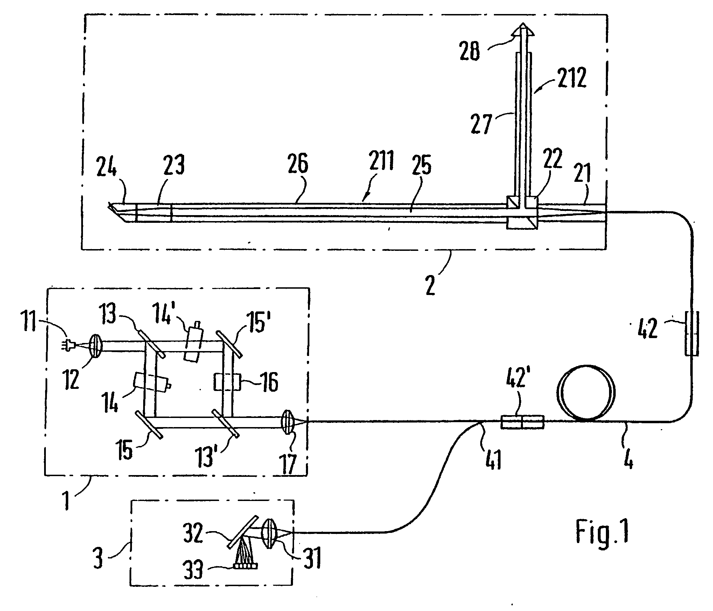

- Fig. 1: eine schematische Darstellung einer interferometrischen Meßeinrichtung mit einer von einem Modulationsinterferometer räumlich getrennten Meßsonde,

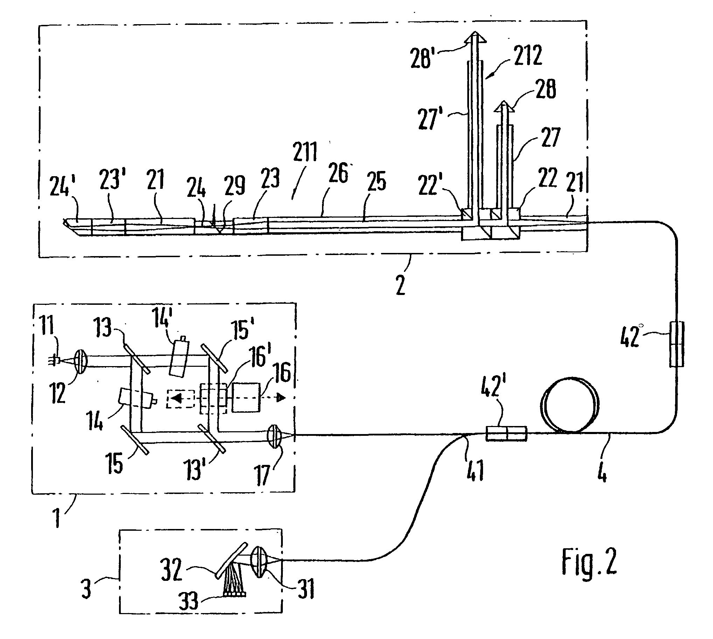

- Fig. 2: ein weiteres Ausführungsbeispiel der interferometrischen Meßeinrichtung mit mehreren Meßstrahlen und Referenzstrahlen und

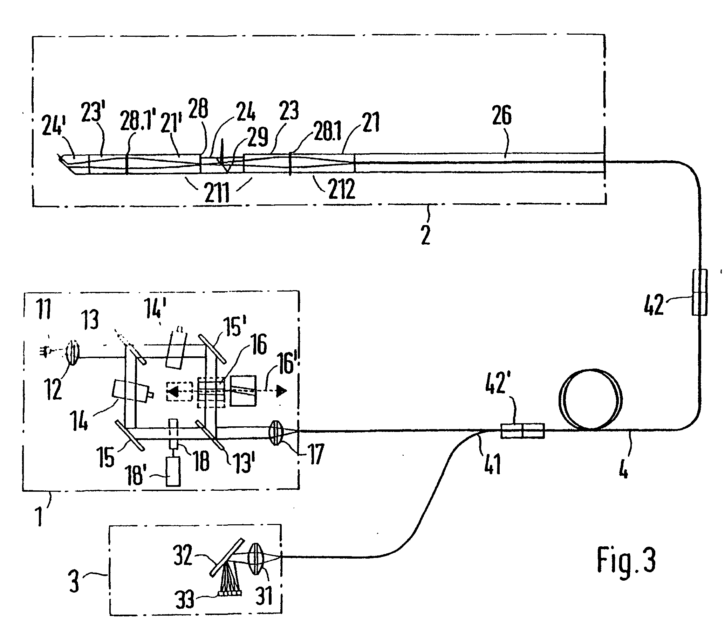

- Fig. 3: ein weiteres Ausführungsbeispiel der interferometrischen Meßeinrichtung, bei der der Meßzweig und der Referenzzweig anders ausgebildet sind.

Die in den Fig. 1 bis 3 gezeigten Ausführungsbeispiele einer interferometrischen Meßeinrichtung zum Erfassen der Form, der Rauhheit oder des Abstandes von Oberflächen bestehen jeweils aus einem Modulationsinterferometer 1 und einer davon räumlich getrennten, über eine Lichtleitfaseranordnung 4 angekoppelten Meßsonde 2, sowie einer den daraus zurückgeführten Strahl aufnehmenden Empfängereinheit 3.

Das Modulationsinterferometer 1 weist eine Strahlungsquelle 11 vorzugsweise in Form einer kurzkohärenten breitbandigen Strahlungsquelle 11 mit einer kontinuierlichen Strahlungsverteilung einer Vielzahl unterschiedlicher Wellenlängen bei gleichzeitig guter räumlicher Kohärenz auf, wie z.B. eine Superluminiszenzdiode. Die Strahlung der Strahlungsquelle 11 wird mittels einer Kollimatorlinse 12 kollimiert und mittels eines ersten Strahlteilers 13 in zwei Teilstrahlen aufgeteilt, die jeweils durch akustooptische Modulatoren 14, 14' geführt und über Ablenkspiegel 15, 15' an einem zweiten Strahlteiler 13' wieder zusammengeführt werden, wobei einer der beiden Teilstrahlen über ein Verzögerungselement 16 bzw. 16' (vgl. Fig. 2 und 3) geführt wird. Die vereinigten Teilstrahlen gelangen über ein Objektiv 17 in die monomode Lichtleitfaseranordnung 4.

Die beiden Teilstrahlen werden mittels der akustooptischen Modulatoren 14 bzw. 14' mit benachbarten, aber unterschiedlichen Frequenzen moduliert. Mittels des Verzögerungselementes 16 bzw. 16' wird eine optische Wegdifferenz der beiden Teilstrahlen in dem Modulationsinterferometer, beispielsweise des Mach-Zehnder-Typs, erzeugt, wobei das Verzögerungselement 16, 16' beispielsweise als Glasplatte einer bestimmten Dicke ausgebildet ist. Auf diese Weise sind die durch den z.B. als halbdurchlässige Scheibe ausgebildeten Strahlteiler 13' vereinigten Teilstrahlen als getrennte Wellenzüge mit zwei benachbarten, verschiedenen Frequenzen vorhanden und räumlich gegeneinander mit einer Länge verschoben, die oberhalb der Kohärenzlänge der Strahlungsquelle 11 liegt.

Die Meßsonde 2 gemäß den Fig. 1 und 2 ist als Interferometer des Michelson-Typs aufgebaut. Der über die monomode Lichtleitfaseranordnung 4 zugeführte vereinigte Lichtstrahl wird mittels einer Kollimatoreinrichtung 21 in Form eines Objektivs kollimiert, anschließend mittels eines dritten Strahlteilers 22 in einen Meßstrahl und einen Referenzstrahl aufgeteilt. Der Meßstrahl wird am ausgangsseitigen Ende eines den Meßstrahl führenden Meßzweigs 211 mittels einer Fokussiereinrichtung 23 in Form eines Objektivs fokussiert und am Ausgang des Meßzweiges 211 mittels eines Ablenkelementes 24 in Form eines Prismas in der Weise abgelenkt, daß die Achse des Strahlkegels am Ausgang des Prismas senkrecht auf die zu messende Oberfläche gerichtet wird. Die Einheit aus dem Prisma 24 und dem Objektiv 23 kann ausgetauscht werden, so daß Oberflächen anderer Kontur vermessen werden können. Die Kollimatoreinrichtung 21 am Eingang der Meßsonde 2 sowie die Fokussiereinrichtung 23 im Endbereich des Meßzweiges 211 sind vorzugsweise als GRIN( = grade-index)-Linse ausgebildet, die eine günstige Strahlführung bietet.

Der an dem dritten Strahlteiler abgetrennte Referenzstrahl wird in einem Referenzzweig 212 auf ein an dessen Ende vorgesehenes Reflektorelement 28 in Form eines Prismas geführt und dort umgelenkt, wobei das Prisma in Richtung der optischen Achse des Referenzzweiges 212 verstellt werden kann. Der Meßzweig 211, der den Meßstrahl als kollimierten Strahl 25 führt, weist an den dritten Strahlteiler 22 anschließend einen Meßstrahl-Leitkörper 26 in Form eines Festkörpers auf, während der Referenzzweig 212 einen Referenzstrahl-Leitkörper 27 bzw. 27' in Form eines weiteren Festkörpers aufweist.

Die Länge des kollimierten Strahles 25 in dem Meßzweig 211 und sein Durchmesser sind an die Abmessungen des Meßobjektes, beispielsweise der Tiefe und den Durchmesser einer zu vermessenden Bohrung angepaßt. Der Abschnitt, in dem der Strahl 25 kollimiert ist, kann als Glaszylinder ausgebildet sein, so daß die Meßsonde 2 kompakt ausgebildet ist.

Der Referenzstrahl durchläuft ein Medium 27 großer Dispersion, wie z.B. ein Glasstück, um die chromatische Dispersion des Meßzweiges 211 und des Verzögerungselementes 16 des Modulationsinterferometers 1 zu kompensieren. Der Referenzstrahl wird mittels des Reflektors 28, etwa einen Spiegel oder ein katadioptrisches Element zurückgeführt, wobei durch Verstellen des Reflektors 28 eine kompensierende optische Wegdifferenz zwischen dem Meßzweig 211 und dem Referenzzweig 212 justierbar ist, die die durch das Verzögerungselement 16 erzeugte optische Wegdifferenz ausgleicht.

Der über den Meßzweig 211 zurückgeführte Meßstrahl und der über den Referenzzweig 212 zurückgeführte Referenzstrahl interferieren an dem dritten Strahlteiler 22 und werden über die Lichtleitfaseranordnung 4, die auch zur Zuleitung des vereinten Strahls zu der Meßsonde 2 dient, zurückgeführt und über ein Abzweigstück 41 zur Empfängereinheit 3 geleitet. Die Lichtleitfaseranordnung 4 kann dabei mittels Steckverbinder 42, 42' mit der Meßsonde 2 einerseits und dem Modulationsinterferometer 1 sowie der Empfängereinheit 3 andererseits gekoppelt werden. Die Steckverbinder des Modulationsinterferometers 1, der Meßsonde 2 und/oder der Empfängereinheit 3 können dabei als entsprechende Buchse unmittelbar an dem Gehäuse angeordnet sein.

Das Aufnahmeobjektiv 31 der Empfängereinheit 3 bewirkt, daß die Austrittsfläche der monomoden Lichtleitfaseranordnung 4 nach Durchlaufen einer Strahlzerlegungseinheit 32 in die Ebene einer Fotoempfängereinheit 33 abgebildet wird. Jede Fotodiode empfängt also die Abbildung der Austrittsfläche der Lichtleitfaseranordnung mit einer gegebenen Wellenlänge.

Wie Fig. 2 zeigt, ist in dem Meßzweig 211 ein weiterer Strahlteiler 29 in Form eines Prismas angeordnet, mit dem ein weiterer Meßstrahl abgezweigt wird. Dieser besitzt gegenüber dem ersten, durchgehenden Meßstrahl einen unterschiedlichen Auskoppelwinkel, so daß Oberflächenbereiche unterschiedlicher Ausrichtung gleichzeitig vermessen werden können, wobei die Position der Meßsonde bezüglich des Meßobjektes beibehalten wird und keine zusätzlichen Justagearbeiten erforderlich sind. Bezüglich des weiteren Meßstrahls ergibt sich eine weitere optische Wegdifferenz zwischen dem Meßzweig 211 und dem Referenzzweig 212, die mittels eines Austausches des Verzögerungselementes 16 durch ein anderes Verzögerungselement 16' einer entsprechend angepaßten optischen Wegdifferenz ausgeglichen werden kann. Eine genaue Einstellung der kompensierenden optischen Wegdifferenz in der Meßsonde 2 kann dabei beispielsweise durch Verstellen des Reflektors 28 vorgenommen werden, so daß der abgespaltete Meßstrahl mit dem Referenzstrahl zur Interferenz gebracht wird. Die Meßstelle kann dabei durch das eingesetzte Verzögerungselement 16 bzw. 16' und den Kohärenzmultiplex identifiziert werden. Gemäß Fig. 2 ist aber zur Erzeugung einer auf das ausgetauschte Verzögerungsselement 16' abgestimmten kompensierenden optischen Wegdifferenz ein zweiter Referenzzweig mit einem zweiten Referenzstrahl-Leitkörper 27' und einem zweiten Reflektor 28' gebildet, so daß sich zwei fest vorgegebene kompensierende optische Wegdifferenzen entsprechend den zwei Meßstrahlen bzw. Meßstellen abgestimmt auf die optischen Wegdifferenzen der Verzögerungselemente 16 bzw. 16' ergeben, wobei die kompensierenden Wegdifferenzen allenfalls noch durch eine Feinjustierung des Reflektors 28 bzw. 28' eingestellt zu werden brauchen. Zur Bildung der beiden Referenzzweige sind zwei dritte Strahlteiler 22 bzw. 22' vorgesehen.

Entsprechend können auch mehr Meßstrahlen durch weitere Strahlteiler 29 gebildet werden, wobei immer ein Teil des Meßstrahles durch den Strahlteiler 29 zu dem dahinter angeordneten Strahlteiler bzw. Ausgang des Meßzweiges 211 ohne Ablenkung durchgelassen wird. Die Anzahl der Referenzzweige entspricht dann vorzugsweise der Anzahl der gebildeten Meßstrahlen, und es sind auch entsprechend viele Verzögerungselemente in dem Modulationsinterferometer 1 vorhanden, so daß mittels Kohärenzmultiplex eine eindeutige Zuordnung zur Meßstelle gegeben ist.

Ein weiteres Ausführungsbeispiel der interferometrischen Meßeinrichtung ist in Fig. 3 gezeigt. Die Arbeitsweise entspricht dabei derjenigen gemäß Fig. 2. Im Unterschied zu dem Ausführungsbeispiel gemäß Fig. 2 ist die Meßsonde 2 als Interferometer des Fizeau-Typs ausgebildet, bei dem am Eingang der Meßsonde 2 beispielsweise nach einem Lichtleiter 26 in Form eines Glaszylinders wiederum eine GRIN-Linse 21 und entsprechend auch im Endbereich des Meßzweiges GRIN-Linsen 21, 23, 21' und 23' angeordnet sind. Vor der Abkoppelstelle des ersten Meßstrahles ist im Bereich der Eingangs-GRIN-Linse ein teildurchlässiges optisches Element angeordnet, an dem ein Teil des in die Meßsonde 2 geführten Strahls reflektiert wird. In diesem teildurchlässigen Element erfolgt eine Interferenz mit dem an der im Strahlengang ersten Stelle abgezweigten und von der zu vermessenden Oberfläche zurücklaufenden Meßstrahl, wobei die optische Wegdifferenz zwischen dem Meßstrahl und dem an dem teildurchlässigen optischen Element gebildeten Referenzstrahl so groß ist, daß die Wegdifferenz des in dem Modulationsinterferometer 1 vorgesehenen Verzögerungselements 16 kompensiert wird. Entsprechend ist auch in dem im Strahlengang hinter der Abzweigstelle des ersten Meßstrahles angeordneten GRIN-Linse ein teildurchlässiges optisches Element 28.1' angeordnet, an dem eine Interferenz in der vorstehend beschriebenen Weise mit dem über den Endbereich der Meßsonde 2 geführten Meßstrahl erzeugt wird. Die zwischen diesem weiteren teildurchlässigen optischen Element 28.1' und dem zugehörigen Meßstrahl gebildete kompensierende optische Wegdifferenz ist auf ein weiteres in dem Modulationsinterferometer 1 angeordnetes Verzögerungselement 16' abgestimmt. Auch bei diesem Aufbau der interferometrischen Meßeinrichtung können daher die Meßstellen aufgrund des eingesetzten optischen Verzögerungselementes 16 bzw. 16' in Folge Kohärenzmultiplex identifiziert werden.

Die teildurchlässigen optischen Elemente 28.1, 28.1' sind eben und senkrecht zur optischen Achse des Meßstrahls ausgebildet und sie können in einem Fokussierpunkt 28 des optischen Strahls oder in einer Ebene angeordnet sein, in der der durch den Meßzweig 211 verlaufende Strahl kollimiert ist. Es kann ein einziger Referenzstrahl für alle Meßstrahlen (bzw. Auskoppelprismen der Meßstrahlen), also eine einzige reflektierende Fläche vorgesehen sein oder es können ebensoviele Referenzstrahlen wie Meßstrahlen bzw. Auskoppelprismen, also entsprechend viele reflektierende Flächen vorgesehen sein. Die Justierung des optischen Weges des Referenzstrahles läßt sich dadurch erzielen, daß die Dicke des Verzögerungselementes 16, 16' in dem Modulationsinterferometer 1 geändert wird. Die Änderung der Dicke kann z.B. durch Drehen der Glasplatte des Verzögerungselementes 16, 16' oder durch Austausch von zwei scheibenförmigen Glasplatten geschehen. Die Kompensation der chromatischen Dispersion kann dadurch erfolgen, daß in dem anderen Zweig des Modulationsinterferometers 1 eine Scheibe 18, 18' eines sehr dispersiven Materials, wie z.B. einer Glasplatte und gegebener Dicke eingesetzt wird. Um eine gegebene Oberfläche zu vermessen, genügt es, ein an das Profil der zu messenden Oberfläche angepaßtes Prisma zu verwenden und in dem Modulationsinterferometer 1 eine entsprechende Glasplatte als Verzögerungselement 18, 18' bzw. zur Kompensation der chromatischen Dispersion zu verwenden.

Die optische Strahlungsleistung des Meßstrahles in dem Meßzweig 211 ist in der Regel sehr viel geringer als die optische Strahlungsleistung des Referenzstrahles in dem Referenzzweig 212. Daher ist es vorteilhaft, den dritten Strahlteiler 22 bzw. 22' unsymmetrisch auszubilden, um eine vergrößerte Strahlungsleistung des zurückgeführten Meßstrahls zu erhalten, die derjenigen des Referenzstrahles vergleichbar ist.

Bei dem Ausführungsbeispiel gemäß Fig. 3 ist von Vorteil, daß außer der schlanken Form durch den in einem gemeinsamen Arm verlaufenden Meßzweig und Referenzzweig die Meßsonde 2 weniger empfindlich gegen Temperaturänderungen ist.

Ein Vorteil aller Ausführungsformen ist, daß die Einstell- und Regulierungseinrichtung der Meßsonde 2 in dem Modulationsinterferometer 1 von dieser getrennt ist. Dieselbe Einstell- und Regulierungsvorrichtung kann für eine große Anzahl von Meßsonden 2 verwendet werden, wodurch die Meßvorrichtung kostengünstig wird.

## Patentansprüche

1. Interferometrische Messeinrichtung zum Erfassen der Form, der Rauhheit oder des Abstandes von Oberflächen
- mit einem Modulationsinterferometer (1), das eine räumlich kohärente Strahlungsquelle (11) und einen ersten Strahlteiler (13) zum Aufteilen von deren Strahlung in zwei Teilstrahlen aufweist, von denen der eine gegenüber dem anderen mittels einer Modulationseinrichtung (14, 14') in seiner Licht-Phase oder Licht-Frequenz verschoben ist und die anschließend vereinigt sind,
- mit einer Messsonde (2), in der die vereinigten Teilstrahlen in einen durch einen Messzweig (211) geführten und an der Oberfläche reflektierten Messstrahl sowie einen durch einen Referenzzweig (212) geführten und darin reflektierten Referenzstrahl aufgeteilt werden und in der der reflektierte Messstrahl mit dem reflektierten Referenzstrahl überlagert ist, und
- mit einer Empfängereinheit (3) zum Aufspalten der überlagerten Strahlung in mindestens zwei Strahlen mit unterschiedlichen Wellenlängen und Umwandeln der Strahlung in elektrische Signale und zum Auswerten der Signale auf der Grundlage einer Phasendifferenz,
**dadurch gekennzeichnet,**
**dass** das als Baueinheit aufgebaute Modulationsinterferometer (1) von der Messsonde (2) räumlich getrennt und über eine Lichtleitfaseranordnung (4) mit dieser koppelbar ist und
**dass** der Messzweig (211) und der Referenzzweig (212) durch einen oder mehrere den Messstrahl und den Referenzstrahl leitende Festkörper (26, 27, 27') gebildet sind.

2. Messeinrichtung nach Anspruch 1,
**dadurch gekennzeichnet,**
**dass** am Eingang der Messsonde (2) eine Kollimatoreinrichtung (21) und am Ausgang des Messzweigs (29) eine Fokussiereinrichtung (23) und ein dieser nachgeschaltetes Ablenkelement (24) zum Auskoppeln und wieder Einkoppeln des zu der zu vermessenden Oberfläche gerichteten und von dieser reflektierten Messstrahls vorgesehen sind.

3. Messeinrichtung nach Anspruch 2,
**dadurch gekennzeichnet,**
**dass** die Kollimatoreinrichtung (21) und/oder die Fokussiereinrichtung (23) eine GRIN-Linse ist/sind.

4. Messeinrichtung nach einem der vorhergehenden Ansprüche,
**dadurch gekennzeichnet,**
**dass** einer der beiden Teilstrahlen in dem Modulationsinterferometer (1) ein Verzögerungselement (16, 16') durchläuft, das eine Differenz der optischen Weglängen der beiden Teilstrahlen erzeugt, die größer ist als die Kohärenzlänge der von der als kurzkohärente Strahlungsquelle ausgebildeten Strahlungsquelle (11) abgegebene Strahlung, und
**dass** in dem Messzweig (211) bezüglich des Referenzzweiges (212) eine weitere Differenz der optischen Weglängen erzeugt wird, mit der die durch das Verzögerungselement (16, 16') erzeugte Differenz der optischen Weglängen kompensiert wird.

5. Messeinrichtung nach einem der vorhergehenden Ansprüche,
**dadurch gekennzeichnet,**
**dass** der Messzweig (211) mindestens ein weiteres Ablenkelement (29) aufweist, mit dem der in dem Messzweig (211) geführte Messstrahl aufgespalten und auf eine weitere Stelle der zu vermessenden Oberfläche gerichtet und der von dieser reflektierte Messstrahl wieder in den Messzweig (211) eingekoppelt wird.

6. Messeinrichtung nach Anspruch 5,
**dadurch gekennzeichnet,**
**dass** in dem Modulationsinterferometer (1) mittels austauschbarer unterschiedlicher Verzögerungselemente (16, 16') unterschiedliche optische Weglängen vorgebbar sind, und
**dass** die kompensierende Differenz der optischen Weglängen durch Verstellen eines Reflexions- oder Umlenkelementes (28, 28') des Referenzzweiges (212) oder durch den einzelnen abgespalteten Messstrahlen jeweils zugeordnete separate Referenzzweige in Abstimmung auf die unterschiedlichen Verzögerungselemente (16, 16') gebildet ist.

7. Messeinrichtung nach einem der vorhergehenden Ansprüche,
**dadurch gekennzeichnet,**
**dass** der Messzweig (211) und der oder die Referenzzweig(e) (212) als getrennte Arme der Messsonde (2) nach Art eines Michelson-Interferometers (Fig. 1 und 2) aufgebaut sind.

8. Messeinrichtung nach einem der Ansprüche 1 bis 6,
**dadurch gekennzeichnet,**
**dass** der Messzweig (211) und der oder die Referenzzweig(e) (212) in einem gemeinsamen Arm nach Art eines Fizeau-Interferometers (Fig. 3) aufgebaut sind.

9. Messeinrichtung nach einem der vorhergehenden Ansprüche,
**dadurch gekennzeichnet,**
**dass** der zur Messsonde (2) hin und von dieser zurückgeleitete Strahl über eine gemeinsame monomode Lichtleitfaseranordnung (4) geführt ist und
**dass** der zur Empfängereinheit (3) geführte Strahl aus der Lichtleitfaseranordnung (4) mittels eines Abzweigstückes (41) ausgekoppelt ist.

## Revendications

1. Installation de mesure interférométrique pour saisir la forme, la rugosité ou la distance de surfaces, comprenant
- un interféromètre à modulation (1) ayant une source de rayonnement cohérente dans l'espace (11) et un premier diviseur de faisceau (13) pour diviser le faisceau en deux faisceaux partiels, l'un des faisceaux étant décalé de l'autre par une installation de modulation (14, 14') pour la phase de la lumière ou la fréquence de la lumière et ces parties de faisceau étant ensuite réunies,
- une sonde de mesure (2) dans laquelle les faisceaux partiels sont réunis en un faisceau de mesure conduit à travers une branche de mesure (211) et réfléchi à la surface, ainsi qu'un faisceau de référence divisé, conduit à travers une branche de référence (212) et réfléchi dans celle-ci, alors que dans cette branche le faisceau de mesure réfléchi est combiné au faisceau de référence réfléchi, et
- une unité de réception (3) pour diviser le faisceau combiné en au moins deux faisceaux de longueurs d'ondes différentes et convertir le faisceau en signaux électriques et exploiter les signaux sur la base d'une différence de phase,
**caractérisée en ce que**
l'interféromètre à modulation (1) réalisé sous la forme d'un ensemble est séparé dans l'espace de la sonde de mesure (2) en étant couplé à celle-ci par un dispositif de guides de lumière (4) et
la branche de mesure (211) et la branche de référence (212) sont formées par un ou plusieurs corps solides (26, 27, 27') conduisant un ou plusieurs faisceaux de mesure et le faisceau de référence.

2. Installation de mesure selon la revendication 1,
**caractérisée par**
une installation de collimation (21) à l'entrée de la sonde de mesure (2) et une installation de focalisation (23) à la sortie de la branche de mesure (29), ainsi qu'un élément de déviation (24) en aval de ces installations pour découpler et de nouveau injecter le faisceau de mesure dirigé vers la surface à mesurer et réfléchi par celle-ci.

3. Installation de mesure selon la revendication 2,
**caractérisée en ce que**
l'installation de collimation (21) et/ou l'installation de focalisation (23) est/sont une lentille GRIN.

4. Installation de mesure selon l'une des revendications précédentes,
**caractérisée en ce que**
l'un des deux faisceaux partiels traverse un élément de temporisation (16, 16') dans l'interféromètre à modulation (1), cet élément créant une différence de longueur des chemins optiques pour les deux faisceaux partiels, cette différence étant supérieure à la longueur de cohérence du rayonnement émis par la source de rayonnement (11) formée par une source de rayonnement à cohérence courte, et
dans la branche de mesure (211) on crée une autre différence des longueurs de chemins optiques par rapport à la branche de référence (212) par laquelle on compense la différence des longueurs de chemins optiques créée par l'élément de temporisation (16, 16').

5. Installation de mesure selon l'une des revendications précédentes,
**caractérisée en ce que**
la branche de mesure (211) comporte au moins un autre élément déflecteur (29) qui divise le faisceau de mesure conduit dans cette branche de mesure (211) et dirige ce faisceau sur un autre endroit de la surface à mesurer, et le faisceau de mesure réfléchi par cette surface est de nouveau injecté dans la branche de mesure (211).

6. Installation de mesure selon la revendication 5,
**caractérisée en ce que**
dans l'interféromètre à modulation (1) des éléments de temporisation (16, 16') différents, interchangeables sont prévus pour créer des longueurs de chemins optiques différents, et
la différence à compenser des longueurs de chemins optiques se réalise par déplacement d'un élément de réflexion ou de déviation (28, 28') de la branche de référence (212) ou par les branches de référence séparées associées chaque fois aux différents faisceaux de mesure divisés en concordance avec les éléments de temporisation différents (16, 16').

7. Installation de mesure selon l'une des revendications précédentes,
**caractérisée en ce que**
la branche de mesure (211) et la ou les branches de référence (212) comme bras séparés de la sonde de mesure (2) sont réalisées comme un interféromètre de Michelson (figures 1, 2).

8. Installation de mesure selon l'une des revendications 1 à 6,
**caractérisée en ce que**
la branche de mesure (211) et la ou les branches de référence (212) du bras commun sont réalisées comme un interféromètre de Fizeau (figure 3).

9. Installation de mesure selon l'une des revendications précédentes,
**caractérisée en ce que**
le faisceau envoyé vers la sonde de mesure (2) et renvoyé par celle-ci, est conduit par un dispositif de guides de lumière (4) monomode, commun, et
le faisceau guidé vers l'unité de réception (3) est découplé du dispositif à guides de lumière (4) par une branche de dérivation (41).

## Claims

1. Interferometric measuring device for recording the shape, the roughness and the distance of surfaces,
- having a modulation interferometer (1) which has a spatially coherent radiation source (11) and a first beam splitter (13) for splitting the radiation thereof into two component beams of which one is displaced with reference to the other by means of a modulation device (14, 14') with regard to its light phase or light frequency, and which are subsequently united,
- having a measuring probe (2) in which the united partial beams are split into a measuring beam, which is guided through a measuring branch (211) and reflected at the surface, and into a reference beam, which is guided through a reference branch (212) and reflected therein, and in which the reflected reference beam is superimposed on the reflected measuring beam, and
- having a receiver unit (3) for dividing the superimposed radiation into at least two beams with different wavelengths, and for converting the radiation into electric signals and for evaluating the signals on the basis of a phase difference,
**characterized in that** the modulation interferometer (1) constructed as a module is separated spatially from the measuring probe (2) and can be coupled to the latter via a light-conducting fibre arrangement (4), and **in that** the measuring branch (211) and the reference branch (212) are formed by one or more solid bodies (26, 27, 27') conducting the measuring beam and the reference beam.

2. Measuring device according to Claim 1, **characterized in that** provided at the input of the measuring probe (2) is a collimator device (21), and provided at the output of the measuring branch (29) are a focusing device (23) and a deflecting element (24), connected downstream thereof, for coupling out and coupling in again the measuring beam, which is directed toward the surface to be measured and is reflected thereby.

3. Measuring device according to Claim 2, **characterized in that** the collimator device (21) and/or the focusing device (23) is/are a GRIN lens.

4. Measuring device according to one of the preceding claims, **characterized in that** one of the two component beams in the modulation interferometer (1) traverses a time-delay element (16, 16') which generates a difference between the optical path lengths of the two component beams which is greater than the coherence length of the radiation output by the radiation source (11), which is designed as a short-coherence radiation source, and **in that** with reference to the reference branch (212) there is generated in the measuring branch (211) a further difference between the optical path lengths with the aid of which the difference, generated by the time-delay element (16, 16'), between the optical path lengths is compensated.

5. Measuring device according to one of the preceding claims, **characterized in that** the measuring branch (211) has at least one further deflecting element (29) with the aid of which the measuring beam guided in the measuring branch (211) is divided and directed onto a further point of the surface to the measured, and the measuring beam reflected by the latter is coupled into the measuring branch (211) again.

6. Measuring device according to Claim 5, **characterized in that** different optical path lengths can be prescribed in the modulation interferometer (1) by means of different, exchangeable time-delay elements (16, 16'), and **in that** the compensating difference between the optical path lengths is formed by adjusting a reflecting or deflecting element (28, 28') of the reference branch (212) or by separate reference branches respectively assigned to the individual separated measuring beams in a fashion coordinated with the different time-delay elements (16, 16').

7. Measuring device according to one of the preceding claims, **characterized in that** the measuring branch (211) and the reference branch(s) (212) are constructed as separate arms of the measuring probe (2) in the manner of a Michelson interferometer (Figures 1 and 2).

8. Measuring device according to one of Claims 1 to 6, **characterized in that** the measuring branch (211) and the reference branch(s) (212) are constructed in a common arm in the manner of a Fizeau interferometer (Figure 3).

9. Measuring device according to one of the preceding claims, **characterized in that** the beam led to the measuring probe (2) and back from the latter is guided by a common monomode light-conducting fibre arrangement (4), and **in that** the beam guided to the receiver unit (3) is coupled out of the light-conducting guiding fibre arrangement (4) by means a branch piece (41).
